Europäisches Patentamt

**European Patent Office**

Office européen des brevets

(19)

(11) Numéro de publication: **0 085 007**
**B1**

# FASCICULE DE BREVET EUROPEEN

(12)

(45) Date de publication du fascicule du brevet:
**11.06.86**

(51) Int. Cl.⁴: **C 03 B 33/04**, G 05 B 19/42

(21) Numéro de dépôt: **83400149.7**

(22) Date de dépôt: **21.01.83**

(54) Machine à commande numérique pour découper les feuilles de verre.

(30) Priorité: **22.01.82 DE 3201850**

(43) Date de publication de la demande:
**03.08.83 Bulletin 83/31**

(45) Mention de la délivrance du brevet:
**11.06.86 Bulletin 86/24**

(84) Etats contractants désignés:
**BE CH DE FR GB IT LI LU NL SE**

(56) Documents cités:
**EP - A - 0 011 238**
**EP - A - 0 032 867**
**FR - A - 2 339 577**
**FR - A - 2 367 710**

(73) Titulaire: **SAINT-GOBAIN VITRAGE, Les
Miroirs 18, avenue d'Alsace, F-92400 Courbevoie (FR)**

(72) Inventeur: **Reinmold, Heinz J., Schervierstrasse 6,
Aachen (DE)**
Inventeur: **Arnoldi, Wilhelm, Ronheider Berg 243, Aachen
(DE)**

(74) Mandataire: **Leconte, Jean-Gérard et al, Saint-Gobain
Recherche 39, Quai Lucien Lefranc,
F-93304 Aubervilliers Cedex (FR)**

LIBER, STOCKHOLM 1986

## Description

La présente invention concerne la découpe de feuilles de verre à l'aide d'une machine à commande numérique comportant un chariot muni d'un outil de découpe et mobile suivant deux directions orthogonales X et Y sous l'action de moteurs d'entraînement.

Une machine de découpe de ce type est décrite en détail dans le document DE-C- 2 646 062 (ou son correspondant FR-A- 2 367 710). Cette machine, comme d'autres machines semblables, ne permet que de suivre de manière précise le programme de trajet pré-établi et enregistré par exemple sur une bande magnétique ou sur une bande perforée.

Dans certains cas, il est cependant intéressant de découper une feuille de verre suivant un contour ou une forme qui s'écarte du contour pré-établi par le programme mis en mémoire. Ainsi, il peut arriver par exemple qu'il faille découper une feuille de verre de telle sorte que, tout en conservant la forme d'un dessin-modèle dont les caractéristiques sont déjà en mémoire, elle soit d'une manière générale plus petite ou plus grande que ce dessin-modèle. Dans d'autres cas, on découpe des feuilles de verre qui, selon une seule direction de coordonnées, sont plus courtes ou plus longues que le dessin-modèle programmé. Il en est ainsi par exemple lorsque, en vue de la fabrication de vitrages feuilletés cintrés comportant deux feuilles de verre, les deux feuilles de verre à unir ultérieurement pour former le vitrage feuilleté sont cintrées ensemble et que la feuille se trouvant du côté convexe soit, compte tenu du rayon de cintrage, plus longue que l'autre feuille de quelques millimètres.

Il est connu par le brevet EP-A-0 011 238 concernant une machine de découpe du verre du type précité, de corriger dans l'une ou l'autre des directions X, Y, le déplacement de la table de travail de la machine. Cette correction permet de corriger les écarts par rapport à la courbe, de déplacement prévue. Le correction est obtenue en intervenant sur la transmission entre les rails de coordonnées le long desquels se déplace la table de travail de la machine et les générateurs d'impulsions qui commandent les moteurs grâce auxquels la table de travail de la machine se déplace.

- Mais cette action sur le trajet de la table de travail de la machine nécessite des interventions mécaniques.

L'invention a pour but de réaliser une machine à découper du verre à commande numérique du type spécifié d'une manière telle que le programme de trajet entré en mémoire puisse être allongé ou raccourci au choix dans l'une ou dans les deux directions de coordonnées du trajet, de telle sorte qu'au moyen d'un seul et même programme en mémoire, on puisse découper ou traiter d'une autre manière des feuilles de verre de contours différents, qui par rapport au programme en mémoire, soient allongées ou raccourcies dans l'une ou dans les deux directions de coordonnées, et cela sans intervention mécanique.

Suivant l'invention, ce but est réalisé par le fait que, pour au moins un mécanisme d'entraînement du chariot portant l'outil de travail suivant une direction, le boîtier du générateur d'impulsions est monté à rotation et peut être mû en rotation par un moteur dans un sens identique ou opposé au sens de rotation du rotor du générateur d'impulsions et à un régime proportionnel au régime de rotation du moteur d'entraînement du chariot suivant la direction considérée, cette proportionnalité étant obtenue par la prise en compte de la tension prélevée sur une machine tachymétrique couplée à l'arbre du moteur d'entraînement du chariot dans la direction considérée et le rapport de proportionnalité pouvant varier par action sur un potentiomètre intercalé dans un circuit reliant la machine tachymétrique à un amplificateur de régulation commandant le moteur.

Grâce à la présente invention, on parvient à modifier dans un sens ou dans l'autre les carastéristiques de position nécessaires pour la commande du moteur d'entraînement du chariot, en communiquant au générateur d'impulsions un mouvement supplémentaire qui aboutit à une augmentation ou à une diminution du nombre d'impulsions fournies.

L'invention sera maintenant décrite plus en détail en se référant aux figures jointes qui représentent:.

- figure 1: un schéma synoptique du dispositif de commande du moteur d'entraînement le long d'un axe de coordonnées équipé du dispositif supplémentaire conforme à l'invention;

- figure 2: une vue schématique partielle, en élévation de la partie mécanique du dispositif de commande supplémentaire selon l'invention pour un moteur d'entraînement d'une machine à commande numérique pour la découpe de feuilles de verre.

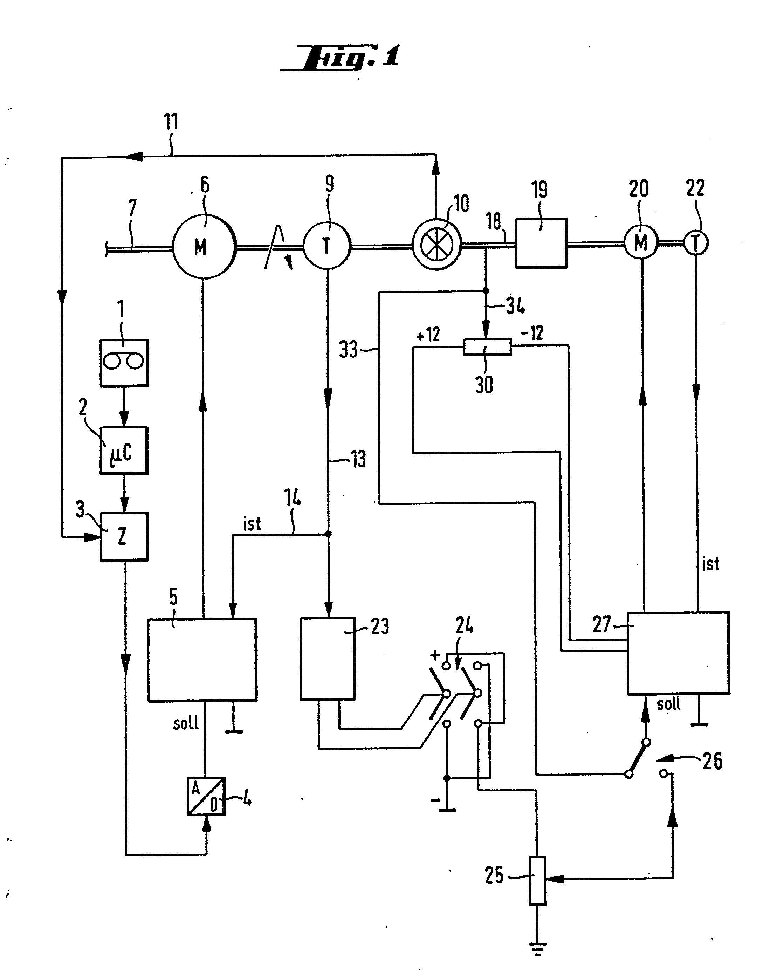

La figure 1 représente la stucture fondamentale d'un dispositif de pilotage d'une machine à découper commandée par un programme suivant un axe de coordonnées. Le support du programme de découpe est, par exemple, une bande magnétique 1. Les signaux de trajet mis en mémoire sur la bande magnétique 1 sont fournis au microprocesseur 2 qui prépare les signaux pour les deux axes de coordonnées et les transmet, sous la forme d'impulsions numériques, par l'intermédiaire d'un compteur différentiel de marche avant et arrière 3 et d'un convertisseur numérique-analogique 4 à un amplificateur de régulation 5 qui régit la rotation d'un moteur 6 d'entraînement d'un arbre 7 qui par le biais de moyens mécaniques classiques non représentés assure le mouvement le long de l'axe de coordonnées considéré d'un chariot non représenté portant l'outil de découpe.

L'arbre 7 du moteur 6 est également accouple mécaniquement d'une part à une machine tachymétrique 9 et d'autre part au rotor d'un générateur d'impulsions 10. Des impulsions fournies par le genérateur d'impulsions 10 sont des caractéristiques de position du chariot et/ou de l'outil de coupe porté par le chariot. Elles sont amenées par la ligne 11 au compteur différentiel de marche avant et arrière 3 pour la comparaison avec les impulsions issues du micro-processeur 2. Une difference est établie et convertie par le convertisseur numériqueanalogique 4 en tension de consigne. La tension fournie par la machine tachymétrique 9 est fournie à l'amplificateur de régulation 5 par l'intermédiaire des lignes 13, 14. Cette tension provenant de la machine tachymétrique 9 représente la position instantanée réelle de l'arbre 7 du moteur 6. A l'intérieur de l'amplificateur de régulation 5, cette tension est mise en série à l'aide d'un montage en opposition avec la tension de consigne provenant du convertisseur numérique-analogique 4 et la tension résultante sert à commander le moteur 6. Un tel dispositif de commande est décrit, par exemple, dans le document DE-C 26 46 062 (ou par son correspondant FR-A-2 367 710) déjà mentionné.

Le boîtier du générateur d'impulsions 10 est fixé sur un arbre 18 à l'aide d'une bride de fixation 17. L'arbre 18 est relié à l'arbre d'un moteur à courant continu 20 (figure 1) par l'intermédiaire d'un réducteur à rapport élevé 19. Comme le montre la figure 21, on utilise avantageusement un moteur réducteur à rapport de démultiplication élevé 21. Un générateur tachymetrique 22 est en outre monté sur l'arbre du moteur 20 ou 21. Le moteur 20 ou 21 sert à faire tourner le boîtier du générateur d'impulsions de rotation 10 de la quantité souhaitée proportionnelle avec le régime de rotation du roteur 6 d'entraînement du chariot portant l'outil de découpe suivant la direction de l'axe de coordonnées considéré. A cet effet, on prélève à titre de grandeur de régulation, la tension de la machine tachymétrique 9 couplée au moteur 6 et on l'introduit dans un amplificateur de regulation 27 par l'intermédiaire d'un élement de séparation galvanique 23, d'un commutateur 24, d'un potentiomètre 25 et d'un commutateur 26. Le générateur tachymétrique 22, relié au moteur 20 ou 21 fournit une tension qui représente la position réelle du dispositif en vue de la comparaison avec la tension de consigne dans l'amplificateur.

Le commutateur 24 permet de changer la polarité de la tension de régulation et ainsi le sens de rotation du boîtier du générateur d'impulsions 10. La rotation du boîtier du générateur d'impulsions 10 dansle sens de rotation du rotor de ce générateur d'impulsions, permet d'allonger le trajet programmé et la rotation du boîtier dans le sens opposé au sens de rotation du générateur d'impulsions 10, permet au contraire de raccourcir le trajet programmé. L'importance du raccourcissement ou de l'allongement est réglée à l'aide du potentiomètre 25. Le réglage est à adapter à chaque application.

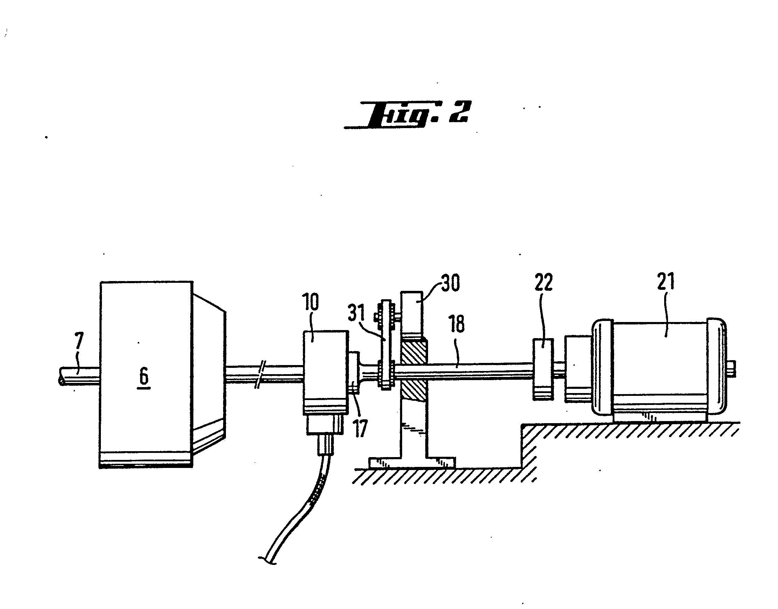

Un autre potentiomètre 30 est couple à l'arbre 18 par la liaison 34. Comme le montre la figure 2, il s'agit dans ce cas avantageusement d'un potentiomètre variable dont la partie tournante est couplée cinématiquement par l'intermédiaire de roues dentées et d'une courroie crantée 31 à l'arbre 18 selon un rapport de transmission 1:1. Ce potentiomètre 30 a pour but, pendant l'immobilisation de la machine de corriger si nécessaire la position de base du boîtier du générateur d'impulsions 10. A cet effet, pendant l'immobilisation de la machine, le commutateur se trouve dans la position représentée sur la figure 1, c'est-à-dire que l'entrée de l'amplificateur de régulation 27 est connectée par l'intermédiaire de la ligne 33 à la liaison 34 du potentiomètre 30. Au cas où, avant le démarrage de l'operation de découpe, une dérive apparaît dans le système d'entraînement du moteur 20 ou 21, ou lorsque le moteur 20 ou 21 n'a pas ramené le boîtier du générateur d'impulsions de rotation 10 de manière précise dans sa position de départ, la prise 34 du potentiomètre 30 donne une tension positive ou négative qui est fournie à l'amplificateur de régulation 27 à titre de tension de régulation. Ce circuit de régulation assure le retour du boîtier du générateur d'impulsions 10 dans la position zéro après chaque opération de découpe.

Pour une machine à découper ayant un chariot portant l'outil de découpe mobile selon deux axes de coordonnées X, Y le dispositif décrit est installé dans le système d'entraînement suivant chacun des deux axes de coordonnées pour pouvoir modifier le programme de découpe enregistré et ainsi modifier le trajet de l'outil de découpe dans les deux directions. Pour certaines applications il suffit de pouvoir modifier le programme enregistré de façon à modifier le trajet suivant une seule direction, par exemple lors de la découpe d'une paire de feuilles de verre qui, ultérieurement, doivent former un vitrage feuilleté et être cintrées. Dans ce cas la feuille se trouvant du côté de la convexité doit seulement être un peu plus longue que l'autre. Un allongement ou un raccourcissement du trajet dans les deux directions permet en même temps un allongement ou un raccourcissement du périmètre d'une certaine valeur. Ainsi l'aide du dispositif décrit pus haut, on peut aussi corriger des défauts de position des molettes de découpe, ce qui jusqu'à présent se corrigeait par remplacement du porte-molette.

**Revendications**

1. Machine à commande numérique pour découper des feuilles de verre d'après modèle comportant un chariot en mouvement suivant deux directions X, Y sous l'action de moteurs (6) dont les arbres sont couplés chacun à un générateur d'impulsions (10) à rotor tournant dansun boîtier, qui fournit des signaux représentant la position du chariot et ces signaux étant comparés avec les signaux de consigne en vue de la commande des moteurs, caractérisée en ce que, pour au moins un mécanisme d'entraînement selon une direction de mouvement, le boîtier du générateur d'impulsions (10) est monté à rotation et peut être mû en rotation par un moteur (20, 21) dans un sens de rotation identique au sens de rotation du rotor du générateur d'impulsions (10) ou opposé à celui-ci à un régime proportionnel au régime de rotation du moteur (6) entraînant le chariot dans la direction considérée, cette proportionnalité étant obtenue par la prise en compte de la tension prélevée sur une machine tachymétrique (9) couplée à l'arbre du moteur (6) d'entrainement du chariot dans la direction considérée et le rapport de proportionnalité pouvant varier par action sur un potentiomètre (25) intercalé dans un circuit reliant la machine tachymétrique (9) à un amplificateur de régulation (27) commandant le moteur (20, 21).

2. Machine selon la revendication 1, caractérisée en ce qu'elle possède un commutateur (24) permettant l'inversion de la polarité de la tension prélevée sur la machine tachymétrique.

3. Machine selon les revendications 1 ou 2, caractérisée en ce qu'elle possède un commutateur (26) à l'entrée de la tension de consigne dans l'amplificateur de régulation (27) permettant au terme de l'opération de découpe de relier ladite entrée à un potentiomètre (30) actionné par le moteur (20, 21).

4. Machine selon les revendications 1 à 3, caractérisée en ce que chacun des deux mécanismes d'entraînement du chariot suivant une direction de mouvement est pourvu d'un générateur d'impulsions (10) à boîtier tournant dont la rotation est commandée par la rotation du moteur d'entraînement du chariot dans la direction considérée.

5. Application d'une machine à commande numérique selon l'une quelconque des revendications 1 à 4 à la découpe des deux feuilles de verre individuelles de grandeurs différentes destinées à former un vitrage feuilleté cintré, notamment un pare-brise de véhicule automobile, l'allongement ou le raccourcissement d'une feuille de verre par rapport à une autre étant obtenu par rotation dans un sens ou dans l'autre du boîtier du générateur d'impulsions (10).

6. Application d'une machine selon l'une des revendications 1 à 4 à la correction de défauts de position de l'outil de coupe.

**Patentansprüche**

1. Numerisch gesteuerte Modellschneidemaschine für Glasscheiben mit einem von Antriebsmotoren (6) angetriebenen X-Y-Kreuzschlitten, dessen Antriebswellen jeweils mit dem sich in einem Gehäuse drehenden Rotor eines Impulsgebers (10) gekoppelt sind, deren Signale die Istwerte für die Position des Kreuzschlittens angeben und für den Sollwert-Istwert-Vergleich der Steuerung der Antriebsmotore dienen, dadurch gekennzeichnet, daß bei wenigstens einem Achsenantrieb das Gehäuse des Impulsgebers (10) drehbar gelagert ist und durch einen Antriebsmotor (20, 21) im zu der Drehrichtung des Rotors des Impulsgebers (10) gleichem oder entgegengesetztem Drehsinn mit einer zu der Drehzahl des zugehörigen Achsen-Antriebsmotors (6) proportionalen Drehzahl in Drehung versetzbar ist, wobei diese Proportionalität durch die an einer mit der Antriebswelle des zugehörigen Achsen-Antriebsmotors (6) gekoppelten Tachomaschine (9) abgegriffene Spannung erreicht wird, und das Verhältnis der Proportionalität durch Betätigung eines in einem die Tachomaschine (9) mit einem den Antriebsmotor (20, 21) steuernden Regelverstärker (27) verbindenden Stromkreis angeordneten Potentiometers (25) veränderbar ist.

2. Maschine nach Anspruch 1, dadurch gekennzeichnet, daß sie einen die Polarität der von der Tachomaschine abgegriffenen Spannung umkehrenden Umschalter (24) aufweist.

3. Maschine nach Anspruch 1 oder 2, dadurch gekennzeichnet, daß sie einen dem Sollwerteingang des Regelverstärkers (27) vorgeschalteten Umschalter (26) aufweist, der am Ende des Schneidvorgangs den Sollwerteingang mit einem von dem Antriebsmotor (20, 21) betätigten Potentiometer (30) verbindet.

4. Maschine nach Anspruch 1 bis 3, dadurch gekennzeichnet, daß beide Achsenantriebe des Kreuzschlittens mit einem Impulsgeber (10) mit einem drehbaren Gehäuse versehen sind, dessen Drehbewegung von der Drehbewegung des zugehörigen Achsen-Antriebsmotors gesteuert wird.

5. Anwendung einer numerisch gesteuerten Maschine nach einem der Ansprüche 1 bis 4 zum Schneiden von zwei für die Herstellung einer gebogenen Verbundglasscheibe, insbesondere einer Kraftfahrzeug-Windschutzscheibe, bestimmten Einzelglasscheiben unterschiedlicher Größe, wobei die Vergrößerung oder die Verkleinerung einer Glasscheibe in Bezug auf eine andere Glasscheibe durch die Verdrehung des Gehäuses des Impulsgebers (10) in dem einen oder dem anderen Drehsinn erfolgt.

6. Anwendung einer Maschine nach einem der Ansprüche 1 bis 4 zur Korrektur der Positionsfehler des Schneidwerkzeugs.

**Claims**

1. A numerically controlled machine for cutting glass sheets according to a pattern comprising a carriage movable in two directions X, Y under the action of motors (6) of which the shafts are both coupled to an impulse generator (10) having a rotor rotatable in a housing, which provides signals representing the position of the carriage and said signals being compared with reference signals for control of the motors, characterised in that, for at least one mechanism for driving in a direction of movement, the casing of the impulse generator (10) is mounted for rotation and may be driven in rotation by a motor (20,21) in a sense of rotation identical to the sense of rotation of the rotor of the impulse generator (10), or in the opposite sense, at a rate proportional to the rate of rotation of the motor (6) driving the carriage in the direction considered, this proportionality being derived from the voltage generated by a tachymetric device (9) coupled to the shaft of the motor (6) for driving the carriage in the direction considered, the ratio of proportionality being variable by means of a potentiometer (25) in a circuit connecting the tachymetric device (9) to a control amplifier (27) controlling the motor (20, 21).

2. A machine according to claim 1, characterised in that it is provided with a commutator (24) allowing inversion of the polarity of the voltage generated by the tachymetric device.

3. A machine according to claim 1 or 2, characterised in that it is provided with a commutator (26) at the input for the reference voltage of the control amplifier (27) allowing, during the cutting operation, said input to be connected to a potentiometer (30) actuated by the motor (20, 21).

4. A machine according to one of claims 1 to 3, characterised in that each of the two mechanisms for driving the carriage in a direction is provided with an impulse generator (10) having a rotatable housing of which rotation is controlled by rotation of the driving motor of the carriage in the direction considered.

5. Application of a numerically controlled machine according to any one of claims 1 to 4 to cutting of two individual glass sheets of different sizes intended to form a curved laminated pane, such as a windscreen for a motor vehicle, lengthening or shortening of one glass sheet relative to the other being obtained by rotation in one sense or the other of the housing of the impulse generator (10).

6. Application of a machine according to one of claims 1 to 4 to correction of errors in position of the cutting tool.

# Fig.1

# *Fig. 2*